# EUROPEAN PATENT APPLICATION

(11) **EP 4 606 615 A1**
(43) Date of publication of application: **27.08.2025**
(21) Application number: 23879823.5
(22) Date of filing: 18.10.2023
(51) Int. Cl.: B60K 6/40, B60K 1/00, B60K 6/387, B60K 6/485, B60K 6/547

(54) **WORK VEHICLE**

(30) Priority: 21.10.2022 JP 2022169241
(71) Applicant: Kubota Corporation, Osaka 556-8601 (JP)
(72) Inventor: HIRASE, Yuji, Sakai-shi, Osaka 590-0908 (JP); YAGYU, Sumio, Sakai-shi, Osaka 590-0908 (JP); OKAZAKI, Kazuto, Sakai-shi, Osaka 590-0908 (JP); II, Tsunehiro, Sakai-shi, Osaka 590-0908 (JP); KOTANI, Shinsuke, Sakai-shi, Osaka 590-0908 (JP)
(74) Representative: Cabinet Beau de Loménie
(86) International application number: PCT/JP2023/037666
(87) International publication number: WO 2024/085180

(57) **Abstract**

A rotation speed of a motor generator can be detected at a low cost in a work vehicle in which the motor generator is joined to a transmission that changes the speed of motive power from an engine to output it to travel devices. A transmission case 13 housing a transmission has a wall section 37a through which rotary shafts 21a and 22a of motor generators 21 and 22 are inserted. Rotors 41a and 42a of resolvers 41 and 42, which detect the rotation speed of the motor generators 21 and 22, are fitted onto the respective rotary shafts 21a and 22a. Stators 41b and 42b of the resolvers 41 and 42 are supported by the wall section 37a.

## Description

### Technical field

The present invention relates to a work vehicle.

### Background Art

There are work vehicles (hybrid work vehicles) equipped with an engine, a transmission (hydrostatic transmission, planetary gear mechanism, forward/reverse switching device, gear shifting system) that changes the speed of motive power from the engine and outputs it to travel devices (front wheels, rear wheels), and a motor generator joined to the transmission, as described in Patent Document 1.

### Prior Art Documents

### Patent Documents

Patent Document 1: JP 2014-65349A

### Disclosure of the Invention

### Problem to be Solved by the Invention

In the above work vehicle, the rotation speed of the motor generator needs to be detected in order to control the motor generator.

The present invention provides a work vehicle capable of detecting a rotation speed of a motor generator at a low cost.

### Means for Solving Problem

A work vehicle according to the present invention includes: an engine; a transmission configured to change a speed of motive power from the engine to output the motive power to a travel device; a motor generator joined to the transmission; and a resolver configured to measure a rotation speed of the motor generator, wherein the transmission is housed in a transmission case having a wall section through which a rotary shaft of the motor generator is inserted, the resolver has a rotor fitted onto the rotary shaft, and the resolver has a stator supported by the wall section.

According to this configuration, the rotor can be rotated by the rotary shaft without providing a special interlocking mechanism for interlocking the rotary shaft and the rotor, and the resolver can perform detection operation with the stator supported by the member for supporting the stator with use of the wall section. This allows the rotation speed of the motor generator to be detected at a low cost.

In the present invention, it is preferable that the resolver is between a housing of the motor generator and the wall section.

According to this configuration, the space required to install the resolver and the motor generator can be reduced to a small space by positioning the resolver and the housing close to each other.

In the present invention, it is preferable that the wall section includes at least one support protruding toward the resolver and supporting the stator.

According to this configuration, it is possible to create a gap between the resolver and the wall section by using the protrusion of the support, and to cool the resolver by using the gap.

In the present invention, it is preferable that the at least one support includes a plurality of supports at a plurality of locations on the wall section that are dispersed in a circumferential direction of the rotor.

According to this configuration, it is possible to create gaps between a plurality of portions of the wall section and the resolver by using the protrusion of the support and the dispersed supports, and to cool the resolver by using the gaps. Further, the presence of the gaps improves workability when attaching the resolver.

In the present invention, it is preferable that the work vehicle further includes a joint bolt joining the stator to the at least one support by being inserted through the stator in a direction along an axis of the rotary shaft from a side opposite to a side where the wall section is located relative to the stator.

According to this configuration, the stator is joined to the support by inserting the joint bolt into the stator in a direction along the axis of the rotary shaft from the side opposite to the side where the wall section is located relative to the stator, and engaging the joint bolt with the support. This allows the stator to be easily joined to the support.

In the present invention, it is preferable that the work vehicle further includes a motor support supporting the motor generator, the motor support being at a portion of the wall section that is on a side opposite to a side where the rotary shaft is located relative to the at least one support in a diameter direction of the rotary shaft.

According to this configuration, the operation of supporting the stator with the support and the operation of supporting the motor generator with the motor support can be performed at positions shifted in the diameter direction of the rotary shaft. This allows the stator and the motor generator to be easily supported by the wall section.

In the present invention, it is preferable that the work vehicle further includes a wire connector for extracting detection information from the resolver, the wire connector being on a front-to-rear wall section of a peripheral wall of the transmission case, the front-to-rear wall section extending in a front-rear direction of a vehicle body.

According to this configuration, the electric wire can be connected to the wire connector from around the front-to-rear wall section of the transmission case, making connection easy.

In the present invention, it is preferable that the work vehicle further includes an electric wire connecting the resolver and the wire connector, the electric wire extending along the wall section.

According to this configuration, it is easy to lay out the electric wire while preventing it from coming into contact with the motor generator.

In the present invention, it is preferable that the work vehicle further includes a wire fixing section fixing the electric wire, the wire fixing section being on the wall section.

According to this configuration, the electric wire is fixed to the wire fixing section and thus prevented from swinging by the wall section.

### Brief Description of the Drawings

FIG. 1 is a left side view of a tractor.
FIG. 2 is a schematic diagram of a travel powertrain device.
FIG. 3 is a plan view of a first motor generator, a second motor generator, a first resolver, and a second resolver.
FIG. 4 is a rear view of a first support, a second support, a first motor support, and a second motor support.
FIG. 5 is a rear view of the first resolver and the second resolver.
FIG. 6 is a side view of a second electric wire.

### Best Mode for Carrying out the Invention

An embodiment as an example of the present invention is described below with reference to the drawings.

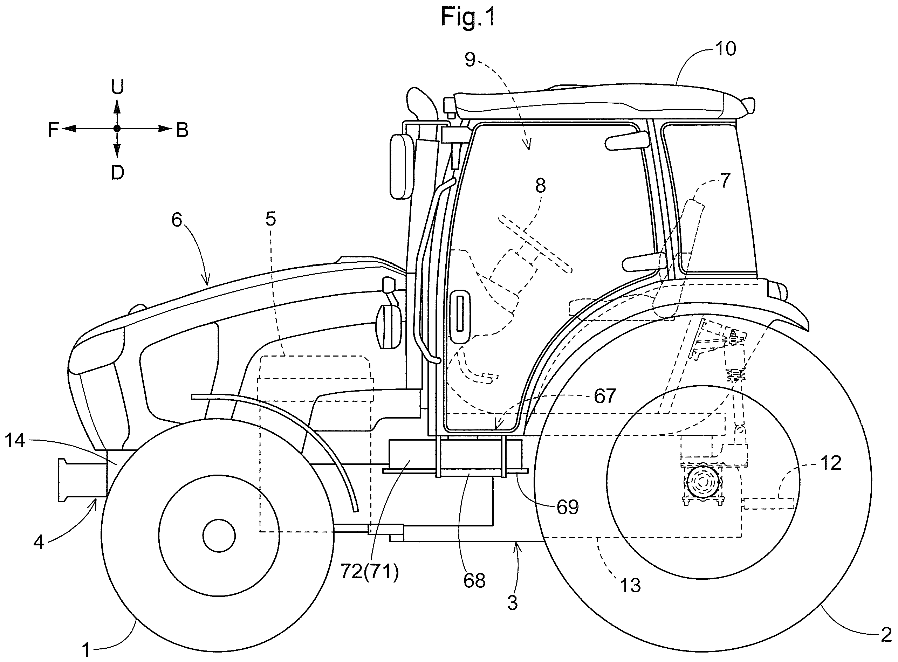

Regarding a traveling vehicle body of a tractor (an example of a "work vehicle") in the following description, the "front of the vehicle body" is defined by the direction of arrow F shown in FIG. 1. The "rear of the vehicle body" is defined by the direction of arrow B shown in FIG. 1. The "upper side of the vehicle body" is defined by the direction of arrow U shown in FIG. 1. The "lower side of the vehicle body" is defined by the direction of arrow D shown in FIG. 1. The "left side of the vehicle body" corresponds to the direction toward the front of the page in FIG. 1, and the "right side of the vehicle body" corresponds to the direction toward the rear of the page in FIG. 1. The left-right direction of the vehicle body corresponds to the lateral width direction of the vehicle body.

### [Overall Configuration of Tractor]

The tractor includes a traveling vehicle body 3 supported by a pair of left and right drivable front wheels 1 and a pair of left and right drivable rear wheels 2, as shown in FIG. 1. The traveling vehicle body 3 includes a vehicle body frame 4 constituted by an engine 5 provided at a front portion of the traveling vehicle body 3, a transmission case 13 joined to a rear portion of the engine 5, and a front frame 14 joined to a lower portion of the engine 5. A motive power section 6, which includes the engine 5, is provided at a front portion of the traveling vehicle body 3. An operator section 9 for an operator to sit in is provided at a rear portion of the traveling vehicle body 3. The operator section 9 includes an operator seat 7, a steering wheel 8 for steering the front wheels 1, and an operator cabin 10 covering a seating space. A link mechanism (not shown) for joining work equipment such as a rotary tiller (not shown) such that it can be raised and lowered, and a motive power take-out shaft 12 for taking out and transmitting motive power from the engine 5 to the joined working device are provided at the rear of the transmission case 13. Although the front wheels 1 and the rear wheels 2 are provided as the travel devices in the present embodiment, crawler travel devices or a combination of wheels and mini-crawler travel devices may alternatively be adopted as the travel devices.

### [Travel Powertrain Device]

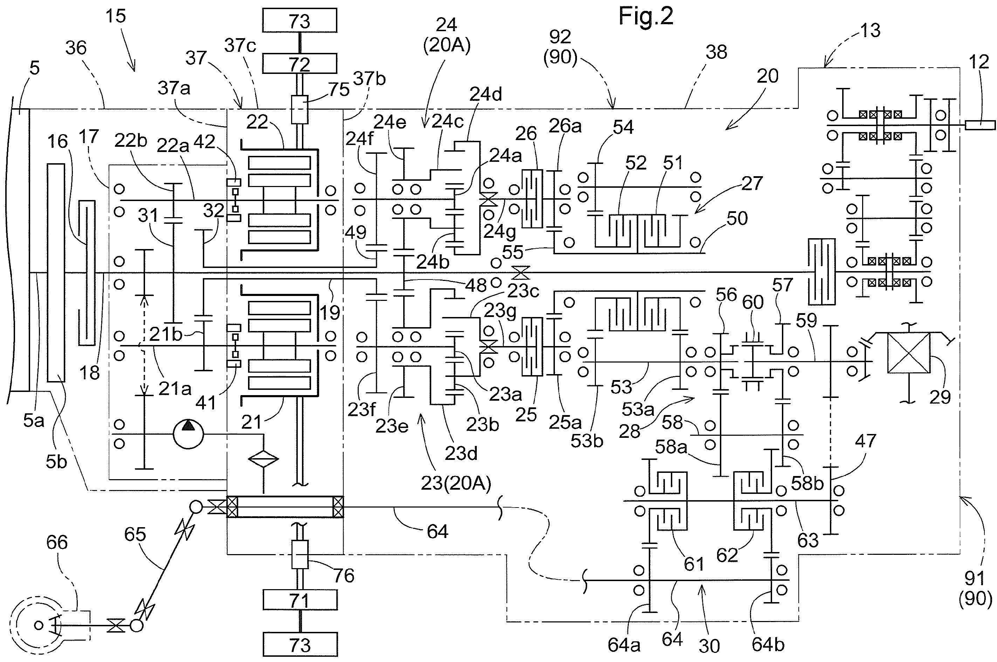

A travel powertrain device 15 for transmitting driving force to the front wheels 1 and the rear wheels 2 includes the transmission case 13 joined to a rear portion of the engine 5, a transmission 20 housed in the transmission case 13 and configured to change the speed of the motive power from the engine 5 and output it to the front wheels 1 and the rear wheels 2, and a first motor generator 21 and a second motor generator 22 that are joined to the transmission 20, as shown in FIG. 2. The transmission case 13 is arranged next to the engine 5 in a direction along the front-rear direction of the vehicle body, and extends in the front-rear direction of the vehicle body at a center portion of the vehicle body in the lateral width direction.

As shown in FIG. 2, the transmission 20 includes: an input shaft 18 to which the motive power from an output shaft 5a of the engine 5 is transmitted via a flywheel 5b and a main clutch 16; a main gear shifting unit 20A to which the motive power from the input shaft 18 is input; a forward-reverse switching unit 27 to which the output of the main gear shifting unit 20A is input; a sub-gear shifting unit 28 to which the output of the forward-reverse switching unit 27 is input; and a front-wheel gear shifting unit 30 to which the output of the sub-gear shifting unit 28 is input.

As shown in FIG. 2, the main gear shifting unit 20A includes a low-speed gear shifting unit 23 and a high-speed gear shifting unit 24. Although the low-speed gear shifting unit 23 and the high-speed gear shifting unit 24 in the present embodiment are arranged side by side in the lateral width direction of the vehicle body, they may alternatively be arranged in the up-down direction of the vehicle body or a laterally inclined direction as viewed in the front-rear direction of the vehicle body.

The low-speed gear shifting unit 23 and the high-speed gear shifting unit 24 are each constituted by a planetary gear mechanism. The low-speed gear shifting unit 23 includes a sun gear 23a, a planetary gear 23b, a carrier 23c, and a ring gear 23d. The high-speed gear shifting unit 24 includes a sun gear 24a, a planetary gear 24b, a carrier 24c, and a ring gear 24d.

The ring gear 23d of the low-speed gear shifting unit 23 and an input shaft gear 48 provided on the input shaft 18 are joined through an interlocking gear 23e. A low-speed output shaft 23g is joined to the carrier 23c of the low-speed gear shifting unit 23. A low-speed clutch 25 extends between the low-speed output shaft 23g and a transmission gear 25a joined to an input shaft 50 of the forward-reverse switching unit 27. The low-speed clutch 25 is switchable between an on-state, in which the motive power is transmitted from the low-speed output shaft 23g to the input shaft 50, and an off-state, in which the transmission of the motive power from the low-speed output shaft 23g to the input shaft 50 is interrupted. The input shaft 50 and the transmission gear 25a are joined by providing on the input shaft 50 a transmission gear 55 that meshes with the transmission gear 25a.

The carrier 24c of the high-speed gear shifting unit 24 and the input shaft gear 48 are joined via an interlocking gear 24e. A high-speed output shaft 24g is joined to the ring gear 24d of the high-speed gear shifting unit 24. A high-speed clutch 26 extends between the high-speed output shaft 24g and a transmission gear 26a joined to the input shaft 50 of the forward-reverse switching unit 27. The high-speed clutch 26 is switchable between an on-state, in which the motive power is transmitted from the high-speed output shaft 24g to the input shaft 50, and an off-state, in which the transmission of the motive power from the high-speed output shaft 24g to the input shaft 50 is interrupted. The input shaft 50 and the transmission gear 26a are joined by causing the transmission gear 26a to mesh with the transmission gear 55.

Although the first motor generator 21 and the second motor generator 22 in the present embodiment are arranged side by side in the lateral width direction of the vehicle body, they may alternatively be arranged in the up-down direction of the vehicle body or a laterally inclined direction as viewed in the front-rear direction of the vehicle body.

The first motor generator 21 is joined to the low-speed gear shifting unit 23 and the high-speed gear shifting unit 24 of the transmission 20, as shown in FIG. 2. More specifically, a rotary shaft 21a of the first motor generator 21 is joined to the sun gear 23a of the low-speed gear shifting unit 23 and the sun gear 24a of the high-speed gear shifting unit 24. The rotary shaft 21a is joined to the sun gear 23a and the sun gear 24a by providing a rotary shaft gear 21b on the rotary shaft 21a, joining a first transmission gear 23f to the sun gear 23a, joining a second transmission gear 24f to the sun gear 24a, and providing a joint member 19 that joins the rotary shaft gear 21b to the first transmission gear 23f and the second transmission gear 24f. The joint member 19 is fitted onto the input shaft 18 in a relatively rotatable manner. A transmission gear 32 meshing with the rotary shaft gear 21b is provided at a front portion of the joint member 19, and a transmission gear 49 meshing with the first transmission gear 23f and the second transmission gear 24f is provided at a rear portion of the joint member 19. This enables the joint member 19 to join the rotary shaft gear 21b to the first transmission gear 23f and join the rotary shaft gear 21b to the second transmission gear 24f.

The second motor generator 22 is joined to the input shaft 18 of the transmission 20, as shown in FIG. 2. More specifically, a transmission gear 22b is provided on the rotary shaft 22a of the second motor generator 22, and a transmission gear 31 meshing with the transmission gear 22b is provided on the input shaft 18.

As shown in FIG. 2, a battery 73 is connected to the first motor generator 21 via a first inverter 71. The first motor generator 21 and the first inverter 71 are connected by connecting an electric wire extending from the first inverter 71 to a terminal 76 provided in the first motor generator 21. The second motor generator 22 is connected, via a second inverter 72, to the same battery 73 to which the first motor generator 21 is connected. The second motor generator 22 and the second inverter 72 are connected by connecting an electric wire extending from the second inverter 72 to a terminal 75 provided in the second motor generator 22. The first inverter 71 and the second inverter 72 are provided on the traveling vehicle body 3 separately on the left lateral side and the right lateral side of the transmission case 13. The battery 73 is provided on one side of the two lateral sides of the transmission case 13, the one side on which the first inverter 71 or the second inverter 72 is located. Although the same battery 73 is connected to the first motor generator 21 and the second motor generator 22 in the present embodiment, different batteries may alternatively be connected to the first motor generator 21 and the second motor generator 22.

In the low-speed gear shifting unit 23, the motive power from the input shaft 18 is transmitted to the ring gear 23d to drive the ring gear 23d, the driving force of the first motor generator 21 is transmitted to the sun gear 23a to drive the sun gear 23a, and the motive power from the engine 5 and the driving force from the first motor generator 21 are combined to generate low-speed compound motive power, which is output from the low-speed output shaft 23g.

In the high-speed gear shifting unit 24, the motive power from the input shaft 18 is transmitted to the carrier 24c to drive the planetary gear 24b, the driving force of the first motor generator 21 is transmitted to the sun gear 24a to drive the sun gear 24a, and the motive power from the engine 5 and the driving force from the first motor generator 21 are combined to generate high-speed compound motive power, which is output from the high-speed output shaft 24g. The high-speed compound motive power is higher-speed compound motive power than the low-speed compound motive power generated by the low-speed gear shifting unit 23.

As shown in FIG. 2, the forward-reverse switching unit 27 includes the input shaft 50 that is joined to the low-speed clutch 25 via the transmission gear 25a and joined to the high-speed clutch 26 via the transmission gear 26a, and a forward clutch 51 and a reverse clutch 52 that are provided on the input shaft 50. In the forward-reverse switching unit 27, the output of the low-speed gear shifting unit 23 is transmitted to the input shaft 50 via the low-speed clutch 25, or the output of the high-speed gear shifting unit 24 is transmitted to the input shaft 50 via the high-speed clutch 26. In response to the forward clutch 51 switching on, the motive power from the input shaft 50 is converted to forward motive power by the forward clutch 51 and a forward transmission gear 53a, to be output from the output shaft 53. In response to the reverse clutch 52 switching on, the motive power from the input shaft 50 is converted to reverse motive power by the reverse clutch 52, a reverse gear 54, and a reverse transmission gear 53b, to be output from the output shaft 53.

As shown in FIG. 2, the sub-gear shifting unit 28 includes an input gear 56 provided on the output shaft 53 of the forward-reverse switching unit 27, an output shaft 59 located rearward of the output shaft 53, and a shift gear 60 supported by the output shaft 59. The output shaft 53 is joined to a rear-wheel differential mechanism 29.

In the sub-gear shifting unit 28, the output of the forward-reverse switching unit 27 is transmitted to the input gear 56. In response to the shift gear 60 engaging with a side portion of the input gear 56, a high-speed transmission state is entered such that the motive power from the input gear 56 is transmitted to the output shaft 59 via the shift gear 60 to be output from the output shaft 59. In response to the shift gear 60 engaging with a side portion of a transmission gear 57 supported by the output shaft 59, a low-speed transmission state is entered such that the motive power from the input gear 56 is transmitted to the output shaft 59 via a transmission gear 58a, a transmission shaft 58, a transmission gear 58b, the transmission gear 57, and the shift gear 60, to be output from the output shaft 59.

As shown in FIG. 2, the front-wheel gear shifting unit 30 includes an input shaft 63 joined to the output shaft 59 of the sub-gear shifting unit 28 via a gear interlocking mechanism 47, and a speed equalizing clutch 61 and an accelerating clutch 62 that are provided on the input shaft 63.

In the front-wheel gear shifting unit 30, the output of the sub-gear shifting unit 28 is transmitted to the input shaft 63. In response to the speed equalizing clutch 61 being turned on, the motive power from the input shaft 63 is subjected to speed change into speed-equalized motive power by the speed equalizing clutch 61 and a speed equalizing gear mechanism 64a, transmitted to the output shaft 64, to be output from the output shaft 64. The speed-equalized motive power is motive power that drives the front wheels 1 at the same speed as the rear wheels 2. In response to the accelerating clutch 62 being turned on, the motive power from the input shaft 63 is subjected to speed change into accelerating motive power by the accelerating clutch 62 and an accelerating gear mechanism 64b, transmitted to an output shaft 64, to be output from the output shaft 64. The accelerating motive power is motive power that drives the front wheels 1 at a higher speed than the rear wheels 2. The output shaft 64 of the front-wheel gear shifting unit 30 is joined to a front-wheel differential mechanism 66 via a rotary shaft 65.

In the travel powertrain device 15, the front wheels 1 and the rear wheels 2 are driven by the motive power from the engine 5 and the driving force from the first motor generator 21.

That is, the first motor generator 21 is driven by electric power supplied from the battery 73 via the first inverter 71. The low-speed gear shifting unit 23 combines the motive power from the engine 5 transmitted to the input shaft 18 and the motive power from the first motor generator 21 into low-speed compound motive power. The high-speed gear shifting unit 24 combines the motive power from the engine 5 transmitted to the input shaft 18 and the motive power from the first motor generator 21 into high-speed compound motive power. In response to the low-speed clutch 25 switching on and the high-speed clutch 26 switching off, the low-speed compound motive power from the low-speed gear shifting unit 23 is transmitted to the input shaft 50 of the forward-reverse switching unit 27. In response to the low-speed clutch 25 switching off and the high-speed clutch 26 switching on, the high-speed compound motive power from the high-speed gear shifting unit 24 is transmitted to the input shaft 50 of the forward-reverse switching unit 27. In response to the forward clutch 51 switching on and the reverse clutch 52 switching off, the low-speed compound motive power or the high-speed compound motive power transmitted to the input shaft 50 of the forward-reverse switching unit 27 is converted to forward motive power by the forward-reverse switching unit 27 and transmitted to the input gear 56 of the sub-gear shifting unit 28. In response to the forward clutch 51 switching off and the reverse clutch 52 switching on, the low-speed compound motive power or the high-speed compound motive power transmitted to the input shaft 50 of the forward-reverse switching unit 27 is converted to reverse motive power by the forward-reverse switching unit 27 and transmitted to the input gear 56 of the sub-gear shifting unit 28. Upon the shift gear 60 of the sub-gear shifting unit 28 engaging with a side portion of the input gear 56, the forward motive power or the reverse motive power transmitted to the input gear 56 is subjected to speed change into high-speed motive power to be output from the output shaft 59. Upon the shift gear 60 of the sub-gear shifting unit 28 engaging with a side portion of the transmission gear 57, the forward motive power or the reverse motive power transmitted to the input gear 56 is subjected to speed change into low-speed motive power to be output from the output shaft 59. The high-speed motive power or the low-speed motive power output from the output shaft 59 is transmitted to the rear-wheel differential mechanism 29 and the front-wheel gear shifting unit 30. In response to the speed equalizing clutch 61 switching on in the front-wheel gear shifting unit 30, speed-equalized motive power is transmitted from the front-wheel gear shifting unit 30 to the front-wheel differential mechanism 66. In response to the accelerating clutch 62 switching on, accelerating motive power is transmitted from the front-wheel gear shifting unit 30 to the front-wheel differential mechanism 66.

In the travel powertrain device 15, the motive power from the engine 5 transmitted to the input shaft 18 is transmitted to the rotary shaft 22a of the second motor generator 22, and the second motor generator 22 is driven to generate electric power when driving the front wheels 1 and the rear wheels 2. The electric power generated by the second motor generator 22 is supplied to the battery 73 via the second inverter 72 to charge the battery 73.

The first motor generator 21 mainly works as an electric motor for driving the front wheels 1 and the rear wheels 2, but also works as a generator during deceleration. The second motor generator 22 mainly works as a generator, but can be configured to work as an electric motor for driving the front wheels 1 and the rear wheels 2.

### [Motor Generator and Resolver]

As shown in FIG. 2, the transmission case 13 can be divided into a front case section 36 located at a front portion of the transmission case 13 and joined to the engine 5, a rear case section 38 located at a rear portion of the transmission case 13, and an intermediate case section 37 located between the rear case section 38 and the front case section 36. The rear case section 38 houses the main gear shifting unit 20A, the forward-reverse switching unit 27, the rear-wheel differential mechanism 29, and the like. The intermediate case section 37 houses the first motor generator 21, the second motor generator 22, a first resolver 41 to detect the rotation speed of the first motor generator 21, and a second resolver 42 to detect the rotation speed of the second motor generator 22. The first resolver 41 detects the rotation speed of the first motor generator 21 to output the detection result to a control device (not shown) that performs control driving the first motor generator 21. The second resolver 42 detects the rotation speed of the second motor generator 22 to output the detection result to a control device (not shown) that performs control driving the second motor generator 22.

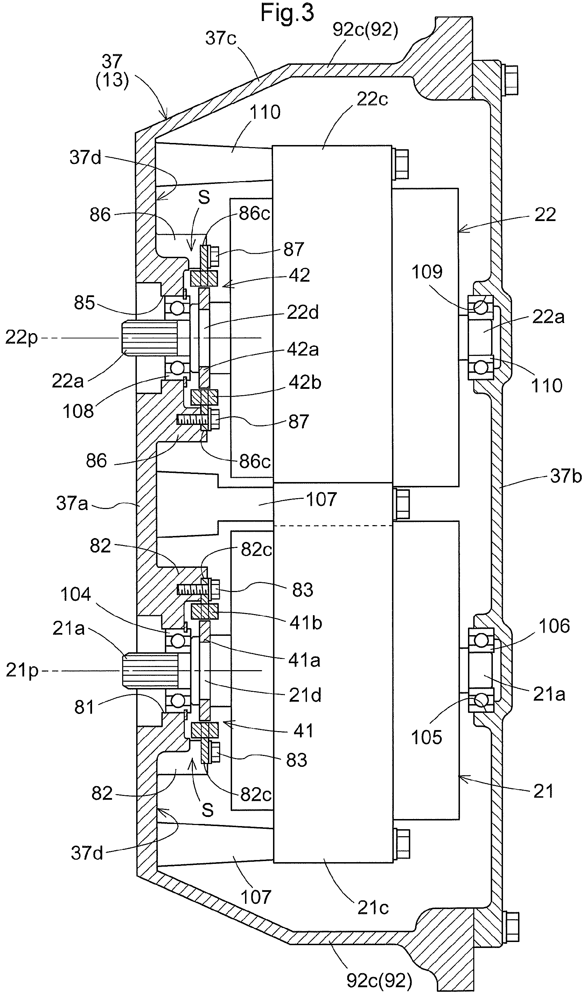

Specifically, the intermediate case section 37 includes a front wall section 37a located at a front end of the intermediate case section 37 and extending in the up-down direction of the vehicle body, a rear wall section 37b located at a rear end of the intermediate case section 37 and extending in the up-down direction of the vehicle body, and a front-to-rear wall section 37c located between the front wall section 37a and the rear wall section 37b and extending in the front-rear direction of the vehicle body, as shown in FIG. 3. The first resolver 41 is disposed between the front wall section 37a and a housing 21c of the first motor generator 21, as shown in FIG. 3. A first rotor 41a of the first resolver 41 is fitted onto a rotor support 21d of the rotary shaft 21a of the first motor generator 21 and is supported by the rotor support 21d in an integrally rotatable manner, as shown in FIG. 3. A first stator 41b of the first resolver 41 is supported by the front wall section 37a. The first rotor 41a is joined to the rotary shaft 21a and rotated by the rotary shaft 21a, and the first stator 41b is fixed to the front wall section 37a, allowing the first resolver 41 to detect the rotation speed of the first motor generator 21.

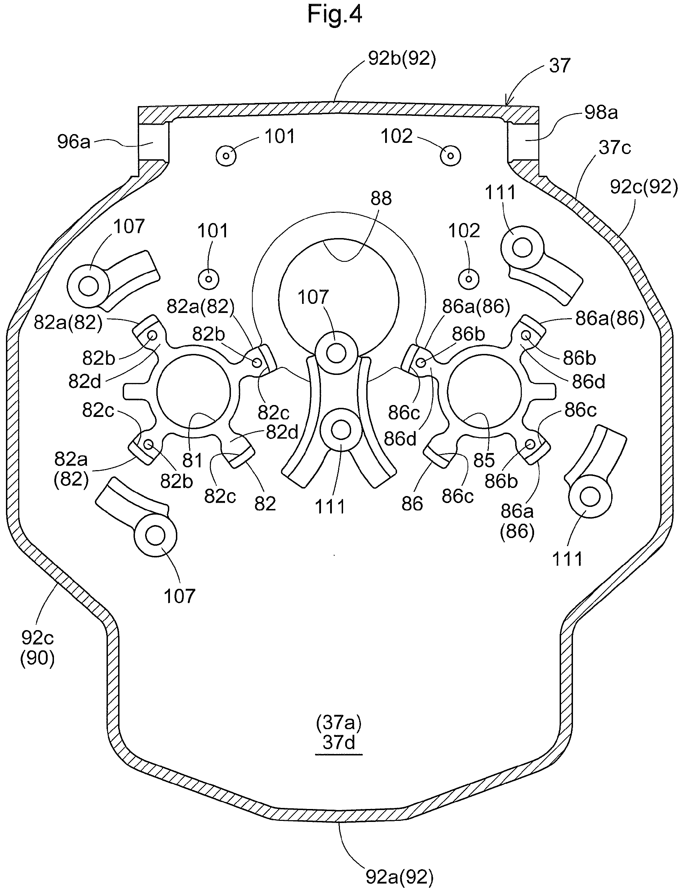

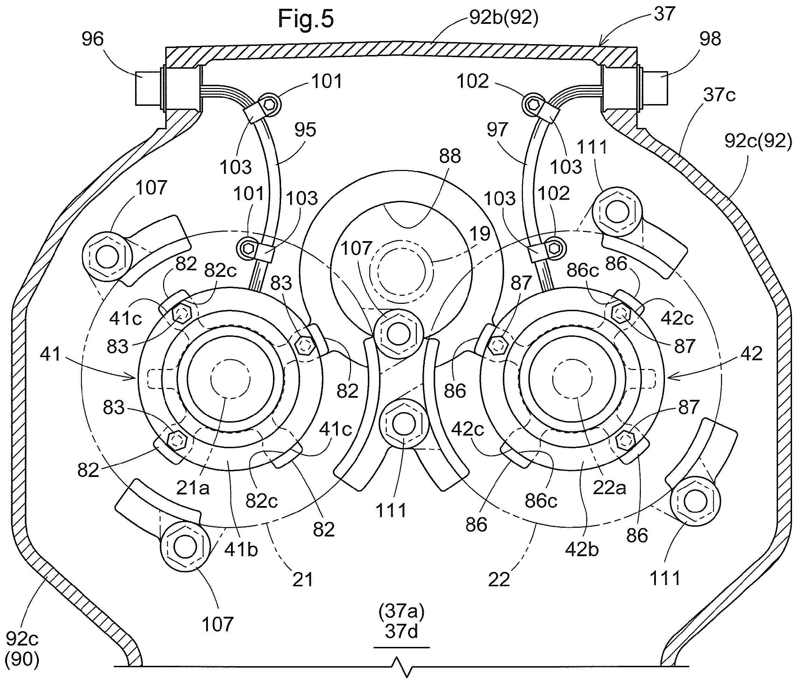

The front wall section 37a supports the first stator 41b of the first resolver 41 based on a support structure shown in FIGS. 3, 4, and 5. That is, the front wall section 37a has a first front support hole 81 through which the rotary shaft 21a of the first motor generator 21 is inserted, and first supports 82 at four locations dispersed in a circumferential direction of the first rotor 41a at portions, which is located around the first front support hole 81, of an inner wall surface 37d of the front wall section 37a, as shown in FIGS. 3 and 4. The first stator 41b is brought into contact with receiving sections 82d of the first supports 82 at the four locations. And the first stator 41b is joined to first supports 82a, at three locations that have screw holes 82b, of the first supports 82 at the four locations, by using first joint bolts 83, as shown in FIGS. 3 and 5. In the present embodiment, the first stator 41b is joined only to the first supports 82 at three locations by using the first joint bolts 83. However, the first stator 41b may alternatively be joined only to the first supports 82 at two locations, or to all of the first supports 82, by using the first joint bolts 83.

The second resolver 42 is disposed between the front wall section 37a and a housing 22c of the second motor generator 22, as shown in FIG. 3. A second rotor 42a of the second resolver 42 is fitted onto a rotor support 22d of the rotary shaft 22a of the second motor generator 22 and is supported by the rotor support 22d in an integrally rotatable manner, as shown in FIG. 3. A second stator 42b of the second resolver 42 is supported by the front wall section 37a. The second rotor 42a is joined to the rotary shaft 22a and rotated by the rotary shaft 22a, and the second stator 42b is fixed to the front wall section 37a, allowing the second resolver 42 to detect the rotation speed of the second motor generator 22.

The front wall section 37a supports the second stator 42b of the second resolver 42 based on the support structure shown in FIGS. 3, 4, and 5. That is, the front wall section 37a has a second front support hole 85 through which the rotary shaft 22a of the second motor generator 22 is inserted, and second supports 86 at four locations dispersed in a circumferential direction of the second rotor 42a at portions, which is located around the second front support hole 85, of the inner wall surface 37d of the front wall section 37a, as shown in FIGS. 3 and 4. The second stator 42b is brought into contact with receiving sections 86d of the second supports 86 at the four locations. And the second stator 42b is joined to second supports 86a, at three locations that have screw holes 86b, of the second supports 86 at the four locations, by using second joint bolts 87, as shown in FIGS. 3 and 5. In the present embodiment, the second stator 42b is joined only to the second supports 86 at three locations by using the second joint bolts 87. However, the second stator 42b may alternatively be joined only to the second supports 86 at two locations, or to all of the second supports 86, by using the second joint bolts 87. A through-hole 88 of the front wall section 37a shown in FIGS. 4 and 5 is for the joint member 19 to be inserted.

The first joint bolts 83 and the second joint bolts 87 are configured to join the first stator 41b and the second stator 42b to the first supports 82a and second supports 86a, respectively, with the first stator 41b and the second stator 42b being inserted from the side opposite to the side where the front wall section 37a is located relative to the first stator 41b and the second stator 42b, in directions along an axis 21p of the rotary shaft 21a and an axis 22p of the rotary shaft 22a, and engaging with the first supports 82a and the second supports 86a, as shown in FIGS. 3 and 5.

The first supports 82 and the second supports 86 protrude from the inner wall surface 37d of the front wall section 37a toward the first resolver 41 and the second resolver 42, respectively, as shown in FIG. 3. A gap S that enables the first resolver 41 to be cooled is formed between the inner wall surface 37d of the front wall section 37a and the first stator 41b. A gap S that enables the second resolver 42 to be cooled is formed between the inner wall surface 37d and the second stator 42b.

As shown in FIGS. 3, 4, and 5, each first support 82 has a first positioning section 82c, and each second support 86 has a second positioning section 86c. The first positioning section 82c is configured to come into contact with a circumferential portion 41c of the first stator 41b from the outer side of the first stator 41b in the diameter direction thereof, and position the first stator 41b relative to the first rotor 41a such that the axis of the first stator 41b coincides with the rotation axis of the first rotor 41a. The second positioning section 86c is configured to come into contact with a circumferential portion 42c of the second stator 42b from the outer side of the second stator 42b in the diameter direction thereof, and position the second stator 42b relative to the second rotor 42a such that the axis of the second stator 42b coincides with the rotation axis of the second rotor 42a.

The transmission case 13 has a peripheral wall 90 including a rear longitudinal wall section 91, which is located at a rear end of the transmission case 13 and extends in the up-down direction of the vehicle body, and a front-to-rear wall section 92, which extends in the front-rear direction of the vehicle body between the engine 5 and the rear longitudinal wall section 91, as shown in FIG. 2. The front-to-rear wall section 92 includes a bottom wall section 92a, which is located at a bottom of the front-to-rear wall section 92 and extends in the lateral width direction of the vehicle body, an upper wall section 92b, which is located at an upper portion of the front-to-rear wall section 92 and extends in the lateral width direction of the vehicle body, and lateral wall sections 92c, which are located at left and right lateral side portions of the front-to-rear wall section 92 and extend in the up-down direction of the vehicle body, as shown in FIGS. 3, 4, and 5.

A first wire connector 96, which is connected to the first resolver 41 via the first electric wire 95 and capable of extracting detection information from the first resolver 41, and a second wire connector 98, which is connected to the second resolver 42 via the second electric wire 97 and capable of extracting detection information from the second resolver 42, are provided on the front-to-rear wall section 92 of the peripheral wall 90 of the transmission case 13, as shown in FIG. 5. The first wire connector 96 faces laterally outward to the left, and the second wire connector 98 faces laterally outward to the right. In the present embodiment, the first wire connector 96 is located at a portion of the front-to-rear wall section 92 at which the upper wall section 92b and the left lateral wall section 92c are connected, and the second wire connector 98 is located at a portion of the front-to-rear wall section 92 at which the upper wall section 92b and the right lateral wall section 92c are connected, as shown in FIG. 5. However, the first wire connector 96 and the second wire connector 98 may alternatively be located at intermediate portions, in the lateral width direction of the vehicle body, of the upper wall section 92b of the front-rear wall part 92, or intermediate portions, in the up-down direction of the vehicle body, of the right and left lateral wall sections 92c. The first wire connector 96 is fitted into a first support hole 96a provided in the intermediate case section 37 (see FIG. 4). The second wire connector 98 is fitted into a second support hole 98a provided in the intermediate case section 37 (see FIG. 4).

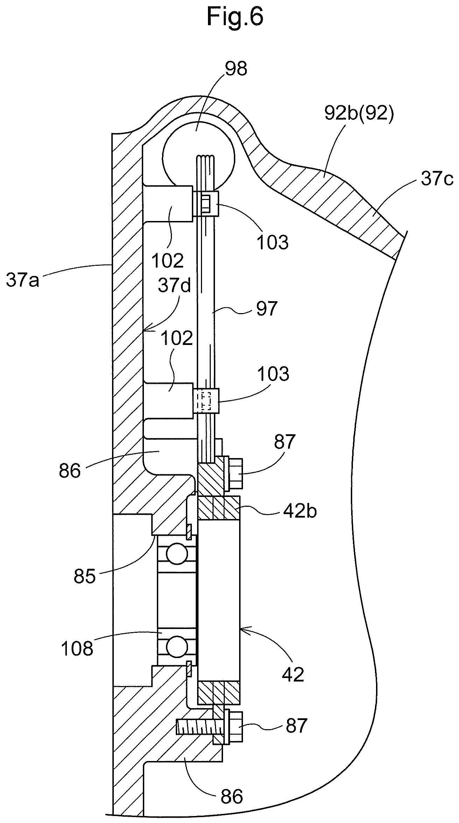

The first electric wire 95 and the second electric wire 97 are laid out along the front wall section 37a, as shown in FIGS. 5 and 6. More specifically, the first electric wire 95 and the second electric wire 97 are laid out along the inner wall surface 37d of the front wall section 37a.

The first electric wire 95 is fixed to a first wire fixing section 101 formed on the front wall section 37a, and the second electric wire 97 is fixed to a second wire fixing section 102 formed on the front wall section 37a, as shown in FIGS. 5 and 6. The second wire fixing section 102 protrudes from the inner wall surface 37d of the front wall section 37a toward the second resolver 42, as shown in FIG. 6. Although the first wire fixing section 101 is not shown in FIG. 6, the first wire fixing section 101 also protrudes toward the first resolver 41, similar to the second wire fixing section 102. The first electric wire 95 is fixed to the first wire fixing section 101 by joining a fastening member 103 attached to the first electric wire 95 to the first wire fixing section 101 using a joint screw, as shown in FIG. 5. The second electric wire 97 is fixed to the second wire fixing section 102 by joining a fastening member 103 attached to the second electric wire 97 to the second wire fixing section 102 using a joint screw, as shown in FIG. 5.

### [Support of Motor Generator]

The first motor generator 21 and the second motor generator 22 are supported by the front wall section 37a and the rear wall section 37b of the intermediate case section 37, as shown in FIG. 3.

Specifically, as shown in FIGS. 3, 4, and 5, the front wall section 37a has a first front support hole 81 into which a front portion of the rotary shaft 21a of the first motor generator 21 is inserted. A bearing 104 is provided that is fitted onto the rotary shaft 21a and fitted into the first front support hole 81. The front portion of the rotary shaft 21a is supported by the front wall section 37a via the bearing 104. As shown in FIG. 3, the rear wall section 37b has a first rear support recess 105 that a rear portion of the rotary shaft 21a enters. A bearing 106 is provided that is fitted onto the rotary shaft 21a and fitted into the first rear support recess 105. The rear portion of the rotary shaft 21a is supported by the rear wall section 37b via the bearing 106. As shown in FIGS. 4 and 5, first motor supports 107 are provided at portions of the front wall section 37a that are located on the side opposite to the side where the rotary shaft 21a is located relative to the first supports 82 in the diameter direction of the rotary shaft 21a. The housing 21c of the first motor generator 21 is supported by the first motor supports 107. The housing 21c is supported by the first motor supports 107 by joining joint sections provided on the housing 21c to the first motor supports 107 using joint bolts.

As shown in FIGS. 3, 4, and 5, the front wall section 37a has a second front support hole 85 into which a front portion of the rotary shaft 22a of the second motor generator 22 is inserted. A bearing 108 is provided that is fitted onto the rotary shaft 22a and fitted into the second front support hole 85. The front portion of the rotary shaft 22a is supported by the front wall section 37a via the bearing 108. As shown in FIG. 3, the rear wall section 37b has a second rear support recess 109 that a rear portion of the rotary shaft 22a enters. A bearing 110 is provided that is fitted onto the rotary shaft 22a and fitted into the second rear support recess 109. The rear portion of the rotary shaft 22a is supported by the rear wall section 37b via the bearing 110. As shown in FIGS. 4 and 5, second motor supports 111 are provided at portions of the front wall section 37a that are located on the side opposite to the side where the rotary shaft 22a is located relative to the second supports 86 in the diameter direction of the rotary shaft 22a. The housing 22c of the second motor generator 22 is supported by the second motor supports 111. The housing 22c is supported by the second motor supports 111 by joining joint sections provided on the housing 22c to the second motor supports 111 using joint bolts.

In the present embodiment, the first motor supports 107 and the second motor supports 1111 are each provided at three locations. However, the first motor supports 107 and the second motor supports 111 may alternatively be each provided at two locations or four or more locations. As the first motor supports 107 and the second motor supports 111, one circular first motor support extending over the entire circumference of the housing 21c and one circular second motor support extending over the entire circumference of the housing 22c may be adopted.

### [Other Embodiments]

(1) In the example described in the above embodiment, the first resolver 41 and the second resolver 42 are located between the front wall section 37a and the rear wall section 37b. However, there is no limitation to this example, and the first resolver 41 and the second resolver 42 may alternatively be located forward of the front wall section 37a or rearward of the rear wall section 37b.
(2) In the example described in the above embodiment, the first resolver 41 and the second resolver 42 are located between the housing 21c and the front wall section 37a and between the housing 22c and the front wall section 37a, respectively. However, there is no limitation to this example. Alternatively, either one of the first resolver 41 and the second resolver 42 may be located between the corresponding one of the housing 21c and the housing 22c and the front wall section 37a, and the other one of the first resolver 41 and the second resolver 42 may be arranged between the corresponding one of the housing 21c and the housing 22c and the rear wall section 37b, or both the first resolver 41 and the second resolver 42 may be located between the housing 21c and the rear wall section 37b and between the housing 22c and the rear wall section 37b, respectively.
(3) In the example described in the above embodiment, the first motor generator 21 and the second motor generator 22 are provided. However, only one motor generator or three or more motor generators may alternatively be provided.
(4) In the above embodiment, the first supports 82 and the second supports 86 are each provided at four locations. However, there is no limitation to this example, and the first supports 82 and the second supports 86 may alternatively be provided at three or less locations or at five or more locations. Alternatively, one circular first support extending over the entire circumference of the first stator 41b may be provided in place of the first supports 82 at a plurality of positions, and one circular second support extending over the entire circumference of the second stator 42b may be provided in place of the second supports 86 at a plurality of positions.
(5) In the example described in the above embodiment, the first motor generator 21 and the second motor generator 22 have the same outer diameter. However, the first motor generator 21 and the second motor generator 22 may have different outer diameters.
(6) In the example described in the above embodiment, the first motor generator 21 and the second motor generator 22 are arranged in the lateral width direction of the vehicle body. However, there is no limitation to this example, and the first motor generator 21 and the second motor generator 22 may alternatively be arranged in the front-rear direction of the vehicle body, or in a direction inclined rightward or leftward as viewed in the front-rear direction.
(7) In the example described in the above embodiment, the first wire connector 96 and the second wire connector 98 are provided. However, a configuration in which no wire connector is provided may alternatively be adopted.
(8) In the example described in the above embodiment, the first electric wire 95 and the second electric wire 97 are fixed to the first wire fixing section 101 and the second wire fixing section 102 of the front wall section 37a, respectively, while extending along the front wall section 37a. However, there is no limitation to this example, and these electric wires need not necessarily extend along the front wall section 37a, and may alternatively be fixed to wire fixing sections provided on a part other than the front wall section 37a.

### Industrial Applicability

The present invention can be applied to a work vehicle including a transmission that changes the speed of motive power from an engine and outputs it to travel devices, and a motor generator joined to the transmission.

### Description of Reference Signs

- 1: Front wheel (travel device)
- 2: Rear wheel (travel device)
- 5: Engine
- 13: Transmission case
- 20: Transmission
- 21: First motor generator (motor generator)
- 21a: Rotary shaft
- 21c: Housing
- 21p: Axis
- 22: Second motor generator (motor generator)
- 22a: Rotary shaft
- 22c: Housing
- 22p: Axis
- 37a: Front wall section (wall section)
- 41: First resolver (resolver)
- 41a: First rotor (rotor)
- 41b: First stator (stator)
- 42: Second resolver (resolver)
- 42a: Second rotor (rotor)
- 42b: Second stator (stator)
- 82: First support (support)
- 83: First joint bolt (joint bolt)
- 86: Second support (support)
- 87: Second joint bolt (joint bolt)
- 90: Peripheral wall
- 92: Front-to-rear wall section
- 95: First electric wire (electric wire)
- 96: First wire connector (wire connector)
- 97: Second electric wire (electric wire)
- 98: Second wire connector (wire connector)
- 101: First wire fixing section (wire fixing section)
- 102: Second wire fixing section (wire fixing section)
- 107: First motor support (motor support)
- 111: Second motor support (motor support)

## Claims

1. A work vehicle comprising:
an engine;
a transmission configured to change a speed of motive power from the engine to output the motive power to a travel device;
a motor generator joined to the transmission; and
a resolver configured to detect a rotation speed of the motor generator,
wherein the transmission is housed in a transmission case having a wall section through which a rotary shaft of the motor generator is inserted,
the resolver has a rotor fitted onto the rotary shaft, and
the resolver has a stator supported by the wall section.

2. The work vehicle according to claim 1,
wherein the resolver is between a housing of the motor generator and the wall section.

3. The work vehicle according to claim 1 or 2,
wherein the wall section includes at least one support protruding toward the resolver and supporting the stator.

4. The work vehicle according to claim 3,
wherein the at least one support includes a plurality of supports at a plurality of locations on the wall section that are dispersed in a circumferential direction of the rotor.

5. The work vehicle according to claim 3 or 4, further comprising:
a joint bolt joining the stator to the at least one support by being inserted through the stator in a direction along an axis of the rotary shaft from a side opposite to a side where the wall section is located relative to the stator.

6. The work vehicle according to any one of claims 3 to 5, further comprising:
a motor support supporting the motor generator, the motor support being at a portion of the wall section that is on a side opposite to a side where the rotary shaft is located relative to the at least one support in a diameter direction of the rotary shaft.

7. The work vehicle according to any one of claims 1 to 6, further comprising:
a wire connector for extracting detection information from the resolver, the wire connector being on a front-to-rear wall section of a peripheral wall of the transmission case, the front-to-rear wall section extending in a front-rear direction of a vehicle body.

8. The work vehicle according to claim 7, further comprising:
an electric wire connecting the resolver and the wire connector, the electric wire extending along the wall section.

9. The work vehicle according to claim 8, further comprising:
a wire fixing section fixing the electric wire, the wire fixing section being on the wall section.
